# EUROPÄISCHE PATENTSCHRIFT

(11) **EP 1 446 637 B1**
(45) Veröffentlichungstag und Bekanntmachung des Hinweises auf die Patenterteilung: **04.04.2012**
(21) Anmeldenummer: 02769923.0
(22) Anmeldetag: 06.09.2002
(51) Int. Cl.: G01C 21/32, G06F 1/00

(54) **FAHRERINFORMATIONSVORRICHTUNG UND VERFAHREN ZUR FREISCHALTUNG VON DATEN**
DRIVER INFORMATION DEVICE AND METHOD FOR THE ACTIVATION OF DATA
SYSTEME D'INFORMATION CONDUCTEUR ET PROCEDE D'ACTIVATION DE DONNEES

(30) Priorität: 13.11.2001 DE 10155485
(43) Veröffentlichungstag der Anmeldung: 18.08.2004
(73) Patentinhaber: ROBERT BOSCH GMBH, 70442 Stuttgart (DE)
(72) Erfinder: BARKOWSKI, Andre, 38228 Salzgitter (DE); HEINEMANN, Andreas, 31180 Giesen (DE); SCHLOEGL, Dietmar, 31079 Sibbesse (DE)
(86) Internationale Anmeldenummer: PCT/DE2002/003315
(87) Internationale Veröffentlichungsnummer: WO 2003/042635

(56) Entgegenhaltungen:
- EP-A- 1 139 064
- WO-A-00/45130
- US-A- 5 787 170

## Beschreibung

### Stand der Technik

Die Erfindung geht aus von eine Fahrerinformationsvorrichtung nach der Gattung des Hauptanspruchs. Es sind insbesondere für Navigationssysteme in Fahrzeugen schon Informationsträger bekannt, auf denen Daten über ein Straßennetz und zusätzliche Reiseführerinformationen zu an dem Straßennetz gelegenen Zielen gespeichert sind. Ein Benutzer der Navigationsvorrichtung muss bereits im Voraus diesen Datenträger erwerben. Die Datenträger sind nicht nach einzelnen Straßengebieten geordnet, so dass ein Benutzer, wenn er z.B. von einem Gebiet nur einen kleinen Teil befahren will, trotzdem die gesamten Daten erwerben und auch bezahlen muss. Zudem führen ständige Veränderungen im Straßennetz dazu, dass die Datenträger nach kurzer Zeit veralten, so dass regelmäßig neue, teure Datenträger gekauft werden müssen. Die hohen Kosten für ein großes Kartengebiet, insbesondere für Gebiete, die ein Benutzer nur recht selten befährt, können von einer regelmäßigen Aktualisierung der Datenträger abhalten, zumal von manchen Benutzern ein Großteil der Kartendaten nicht benötigt wird. Ferner sind Navigationssysteme bekannt, bei denen von einer Dienstezentrale Straßenkartendaten oder Routendaten über eine Funkschnittstelle in das Fahrzeug übermittelt werden. In der Dienstezentrale werden die Kartendaten aktuell vorgehalten, so dass dem Benutzer immer aktuelle Kartendaten zur Verfügung stehen. Für die Datenübertragung über die Funkschnittstelle fallen jedoch hohe Gebühren an, die bei jeder Benutzung entrichtet werden müssen.

Aus der EP 1139 064 A1 ist ein Kraftfahrzeug-Navigationssystem mit einem geschützten Speichermedium bekannt. Bei der Nutzung des Speichermediums wird überprüft, ob ein Nutzer von Dateien, wie z. B. Straßenkartendaten, zur Nutzung dieser Daten berechtigt ist. Die Dateien sind hierzu insbesondere verschlüsseft abgespeichert.

Aus der WO 00/45130 ist ein Navigationssystem bekannt, mittels dem Multimediainformationen zu verschiedenen Orten ausgebbar sind. Weitere Informationen können drahtlos abgefragt werden.

### Vorteile der Erfindung

Die erfindungsgemäße Fahrerinformationsvorrichtung und das erfindungsgemäße Verfahren zur Freischaltung von Daten mit den Merkmalen der nebengeordneten Ansprüche haben demgegenüber den Vorteil, dass ein Benutzer einen Datenträger erwerben kann, auf dem bereits alle erforderlichen Daten gespeichert sind. Diese Daten sind jedoch verschlüsselt und können nur mit einem geeigneten Schlüssel, der jeweils gesondert zu bezahlen ist, genutzt werden. Hierdurch bezahlt der Benutzer nur für diejenigen Daten, die er auch tatsächlich nutzen möchte. Ein Kostenaufwand für nicht benötigte Daten kann damit vermieden werden. Der Datenträger selbst kann deshalb preisgünstig angeboten werden, so dass ein Benutzer sich für einen günstigen Preis stets einen aktuellen Datenträger beschaffen kann. Zudem wird der Anreiz von illegalen Kopien eines teuren Datenträgers vermieden, wobei die Decodierung zudem erschwert wird, da die einzelnen Datensätze und/oder Programmdaten vorzugsweise jeweils durch separate Schlüssel vor einer Decodierung geschützt sind. Zudem können verschiedene Daten, die zur Zeit noch aus Preisgründen auf unterschiedlichen Informationsträgern verkauft werden auf einen Datenträger gebracht werden, auf dem diese Informationen nach einer jeweiligen Freischaltung durch den Benutzer zur Verfügung stehen, auch ohne einen neuen Datenträger in ein Lesegerät einlegen oder diesen erst erwerben zu müssen. Damit kann zudem der Vertrieb von Datenträgern vereinfacht werden, da nur noch wenige verschiedene Datenträger angeboten werden müssen. Ferner kann auf eine Funkübertragung von Daten entweder ganz verzichtet werden oder diese kann auf eine Übertragung der Schlüssel bzw. ggf. zusätzlicher aktueller Verkehrsmeldungen beschränkt werden.

Durch die in den Unteransprüchen aufgeführten Maßnahmen sind vorteilhafte Weiterbildungen und Verbesserungen des im Hauptanspruch angegebenen Informationsträgers möglich. Besonders vorteilhaft ist, dass die Datensätze Navigationsinformationen zur Navigation eines Fahrzeugs in einem Straßennetz beinhalten. Insbesondere bei Navigationssystemen, die sich auf die Fahrzeugumgebung beziehen, sind häufige Änderungen im Straßennetz zu berücksichtigen. Bei einer fehlenden Aktualisierung der zur Verfügung stehenden Daten führt dies dazu, dass der Fahrer Umwege in Kauf nehmen muss. Andererseits ist die Zusammenstellung von Navigationsdaten sehr aufwendig, so dass zur Kostendeckung für stets aktuelle Daten ein entsprechend hoher Preis verlangt werden muss. Indem die Navigationsdaten je nach Benutzerwunsch freigeschaltet werden können, kann von einem Benutzer ein realistischer Preis für eine Benutzung der aktuellen Daten der von dem Benutzer gewünschten Gebiete verlangt werden. Da bereits nach kurzer Zeit gegebenenfalls aktualisierte Informationsträger zur Verfügung stehen, wird der Anreiz für ein illegales Kopieren der Datenträger zudem vermindert. Insbesondere ist vorteilhaft, ergänzende Informationen, z.B. touristische Informationen ebenfalls vorzuhalten, die über einen gesonderten Schlüssel zugänglich sind. Auch hier muss ein Benutzer nur noch für diejenigen Informationen Geld aufwenden, die er tatsächlich benötigt. Fährt er andererseits spontan in ein Gebiet, zu dem er Informationen haben möchte, muss er nicht erst einen Datenträger erwerben, sondern kann sich die von ihm gewünschten Daten vorzugsweise vom Fahrzeug aus freischalten lassen.

Ferner ist vorteilhaft, dass der Datenträger Programmdaten der Funktionen des Fahrzeugs und/oder Funktionen der Rechenvorrichtung beinhaltet. Hierdurch kann z.B. eine Bordcomputerfunktion zur Anzeige von Fahrzeugdaten, eine verbesserte Motoransteuerung oder eine veränderte Darstellung in einem Anzeigeinstrument in einem Fahrzeug gegen eine entsprechende Zahlung zur Verfügung stehen. Im Bezug auf die Verwendung des Informationsträgers in einer Fahrzeugnavigationsvorrichtung ist z.B. eine sogenannte dynamische Navigation, also eine Routenberechnung unter Berücksichtigung von Verkehrsmeldungen, erst nach einer entsprechenden Freischaltung möglich.

Besonders vorteilhaft ist, dass der Datenträger beschreibbar ist, so dass aktuelle Informationen und/oder Informationen über die Freischaltung auf dem Datenträger direkt gespeichert werden können. Hierdurch kann bei einem Ausfall des betreibenden Gerätes eine bereits bezahlte Freischaltung für das Gerät nicht verlorengehen.

Erfindungsgemäß ist es vorteilhaft, eine Fahrerinformationsvorrichtung, die auf den Informationsträger zugreifen kann, mit einer Funkschnittstelle zu verbinden. Über diese Funkschnittstelle kann ein Benutzer einen Schlüssel zur Decodierung der von ihm bestimmten, auf dem Informationsträger gespeicherten Datensätze und/oder Programmdaten von einer Dienstezentrale bestellen, ohne dass er das Fahrzeug hierzu verlassen muss. Besonders vorteilhaft ist dabei, dass von der Dienstezentrale ein Schlüssel übertragen wird, der spezifisch für den Informationsträger und in einem bevorzugten Ausführungsbeispiel speziell für eine Kombination aus dem anfordernden Gerät und dem Informationsträger gilt und nur mit dem speziellen Informationsträger bzw. Gerät eine Dekodierung ermöglicht. Hierdurch wird vermieden, dass der freigeschaltete Informationsträger oder eine 1:1-Kopie des Informationsträgers in einem anderen Gerät benutzt werden kann.

Ferner ist vorteilhaft, dass der Schlüssel für die Decodierung der zugeordneten Daten nur für einen vorgegebenen Zeitraum gilt, der über eine Echtzeituhr überwacht wird. Hierdurch kann die Benutzung auch zeitlich eingegrenzt werden, wodurch der zu entrichtende Preis für den Benutzer gegebenenfalls weiter gesenkt werden kann.

Ferner ist vorteilhaft, dass für die Bestellung des Schlüssels eine Identität des Benutzers und/oder des Datenträgers und/oder des aüssendenden Geräts übertragen wird, um der Dienstezentrale eine Identifikation und gegebenenfalls auch eine Berechnung zu erlauben.

### Zeichnung

Ausführungsbeispiele der Erfindung sind in der Zeichnung dargestellt und in der nachfolgenden Beschreibung näher erläutert. Es zeigen
Figur 1 eine erfindungsgemäße Fahrerinformationsvorrichtung, die auf einen erfindungsgemäßen Informationsträger zugreifen kann, in Verbindung mit einer Dienstezentrale,
Figur 2 ein Ausführungsbeispiel für eine Struktur eines erfindungsgemäßen Informationsträgers,
Figur 3 einen Ablauf eines erfindungsgemäßen Verfahrens zum Freischalten von Daten.

### Beschreibung des Ausführungsbeispiels

Der erfindungsgemäße Informationsträger kann für beliebige Rechenvorrichtungen in Fahrzeugen verwendet werden. So können z.B. Daten für das Motormanagement über einen erfindungsgemäßen Informationsträger aktualisiert werden. Durch die Codierung kann dabei sichergestellt werden, dass diese Daten nicht unbefugt verwendet werden, sondern dass die zutreffenden Daten an ein entsprechendes Steuergerät, das zu den jeweiligen Daten passt, übertragen wird. Dabei muss nicht für jeden Steuergerätetyp ein eigener Informationsträger erstellt werden, sondern auf einem Informationsträger können Programmdaten und/oder Datensätze für verschiedene Steuergeräte aufgebracht werden. Insbesondere ist die Verwendung vorteilhaft für Fahrerinformationsvorrichtungen, da diese einerseits nur wenige Schnittstellen mit sicherheitsrelevanten Bereichen des Fahrzeugs aufweisen und andererseits der direkte Kontakt zu einem Fahrzeugnutzer für Fahrerinformationsvorrichtungen besonders groß ist. Hierdurch entsteht seitens des Benutzers auch ein größerer Wunsch, die Fahrerinformationsvorrichtungen, wie z.B. das Kombiinstrument, einen Bordcompüter, eine Multimediaausgabe oder eine Navigationsvorrichtung an seine Bedienwünsche in Bezug auf das äußere Erscheinungsbild und den Funktionsumfang anzupassen. Insbesondere ist eine Verwendung für eine Navigationsvorrichtung vorteilhaft, da die Straßendaten, die die Navigationsvorrichtung für die Erstellung von Fahrhinweisen für die Steuerung des Fahrzeugs in dem Straßennetz benötigt, einerseits aufwendig zu erstellen sind und andererseits recht schnell veralten. Im Folgenden ist die Erfindung anhand des Beispiels einer Navigationsvorrichtung in einem Kraftfahrzeug erläutert.

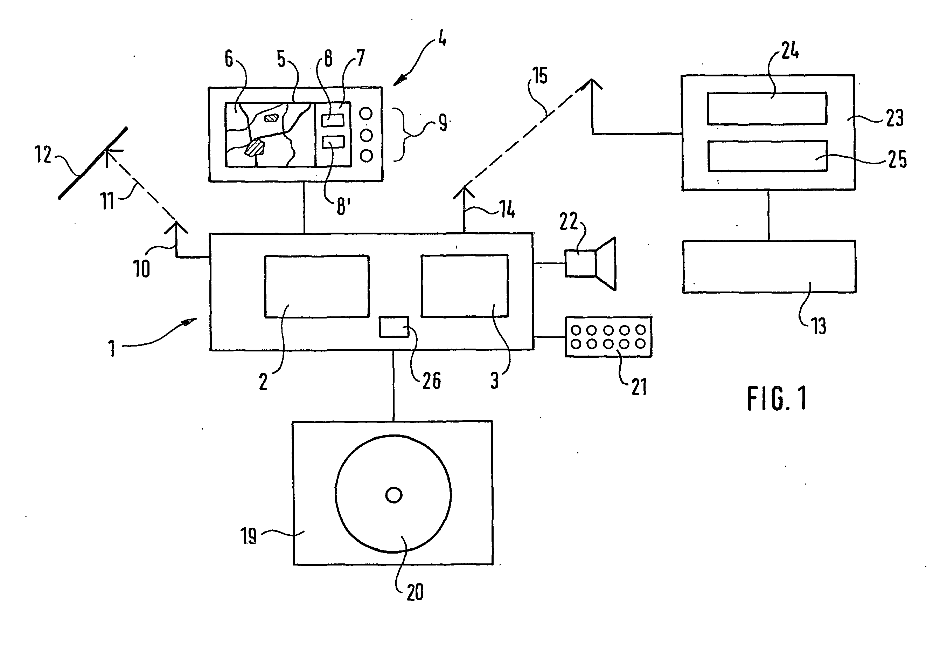

In der Figur 1 ist eine Navigationsvorrichtung 1 dargestellt, die in einem Kraftfahrzeug angeordnet ist. In der Navigationsvorrichtung ist eine Recheneinheit 2 und ein Arbeitsspeicher 3 angeordnet. Die Navigationsvorrichtung 1 ist mit einer Anzeigeeinheit 4 verbunden, die eine Anzeigefläche 5 aufweist. In der Anzeigefläche 5 ist eine Kartendarstellung 6 und ein Bedienmenü 7 mit einzelnen, auswählbaren Menüfeldern 8, 8' dargestellt Neben der Anzeige 5 sind an der Anzeigeeinheit 4 Bedienelemente 9 angeordnet. Ferner weist die Navigationsvorrichtung eine Ortungsworrichtung 10 auf, die über eine Funkverbindung 11 eine Satellitenortung durch Funkkontakt zu Satelliten 12 mittels des GPS (Global Positioning System) durchführen kann und die Position des Fahrzeugs damit bestimmen kann. Die Recheneinheit bestimmt mit den von der Ortungseinheit 10 ermittelten Ortungsdaten eine Position des Fahrzeugs in einem Straßennetz, das auf einem Informationsträger 20 gespeichert ist. Der Informationsträger 2-0, der vorzugsweise als eine CD (Compact Disc) oder eine DVD (Digital Versatile Disc) ausgeführt ist, ist in ein Datenträgerlaufwerk 19 eingelegt. Das Datenträgerlaufwerk ist mit der Navigationsvorrichtung 1 verbunden. Die Recheneinheit 2 berechnet unter Zuhilfenahme des Arbeitsspeichers 3 auf Basis der auf dem Datenträger 20 gespeicherten Straßennetzdaten eine Fahrtroute von einem über die Ortungsvorrichtung 10 bestimmten Startposition des Fahrzeugs zu einem über die Bedienelemente 9 oder über eine Bedieneinheit 21 eingegebenen Fahrziel. Fahranweisungen anhand der bestimmten Fahrtroute werden über die Anzeigefläche 5 und/oder über einen Lautsprecher 22 an den Fahrer ausgegeben. Über eine Funkschnittstelle 14, z.B. ein Mobilfunktelefon oder eine Mobilfunkschnittstelle ist die Navigationsvorrichtung 1 über eine Funkverbindung 15 mit einer Dienstezentrale 23 verbindbar. Die Dienstezentrale 23 weist eine Recheneinheit 24 und eine Speichereinheit 25 auf. Ferner ist die Dienstezentrale 23 mit einer Abrechnungseinheit 13 verbunden.

Die Navigationsvorrichtung 1 ist vorzugsweise hinter die Instrumententafel oder in der Mittelkonsole des Fahrzeugs angeordnet. Die Bedieneinheit 21 und die Anzeigeeinheit 6 sind an einer für den Fahrer gut zugänglichen und sichtbaren Stelle im Fahrzeug, also vorzugsweise ebenfalls an der Mittelkonsole angeordnet, so dass auch ein Beifahrer gegebenenfalls Eingaben vornehmen kann. Die Anzeigefläche 5 ist vorzugsweise als eine Flüssigkristallanzeige, insbesondere als eine berührungsempfindliche Anzeigefläche ausgeführt, so dass auch über eine Berührung der Bedienelemente 8, 8`, die in der Anzeigefläche 5 dargestellt sind, eine Steuerung der Navigationsvorrichtung 1 erfolgen kann. Die Daten liegen dabei auf dem Informationsträger 20 zum größten Teil in codierter Form vor, die von der Navigationsvorrichtung 1 nicht verarbeitet werden können, sofern der Recheneinheit 2 nicht ein entsprechender Schlüssel zum Entschlüsseln der auf dem Informationsträger 20 gespeicherten Daten vorliegt. Auf dem Informationsträger 20 können sowohl reine Datensätze, z.B. Datenbankdatensätze, als auch Programmdaten, also Anweisungen für die Ausführung von Programmen gespeichert sein. In einem frei zugänglichen Teil des Informationsträgers 20 ist ein Inhaltsverzeichnis des Informationsträgers 20 mittels des Datenträgerlaufwerks 19 von der Navigationsvorrichtung 1 abrufbar und in der Anzeigefläche 5 darstellbar. Durch eine Eingabe über die Bedieneinheiten 9, 21 kann ein Benutzer nun die Decodierung eines speziellen Datensatzes oder eines speziellen Programmes der auf dem Informationsträger 20 abgelegten Daten starten.

Hierzu ist von dem Benutzer in einem ersten Ausführungsbeispiel ein entsprechender Code über die
Bedieneinheit 21. in die Navigationsvorrichtung 1 einzugeben. Der eingegebenen Code wird bevorzugt zusammen mit einer Identifikation des Datenträgers 20 und/oder der Navigationsvorrichtung 1 an die Datenzentrale 23 übertragen. Von der Rechenvorrichtung 24 wird nun durch Zugriff auf die Speichereinheit 25 ein Schlüssel zu dem von dem Benutzer gewählten Datensatz und/oder Programm auf dem Informationsträger 20 berechnet und über die Funkverbindung 15 und die Funkschnittstelle 14 an die Navigationsvorrichtung 1 zurückübertragen. Mit Hilfe dieses Schlüssels kann die Recheneinheit 2 nun den dem Schlüssel zugeordneten Datensatz auf dem Informationsträger 20 decodieren und verarbeiten. Ist dies z.B. ein Datensatz mit Straßennetzdaten für ein bestimmtes geographisches oder verwaltungsrechtliches Gebiet, so kann die Rechenvorrichtung 2 nun die entsprechenden Kartendaten auslesen und für die Bestimmung einer Fahrtroute berücksichtigen. Wird bei der Bestellung des Schlüssels auch eine Identifikation des Benutzers, z.B. eine Kreditkartennummer übertragen, so kann die Dienstezentrale 23 eine Abrechnung für die entsprechenden Daten an die Abrechnungseinheit 13 weitergeben, die die Kosten für die Daten dann dem Benutzer berechnen kann. In einem weiteren Ausführungsbeispiel kann auch eine Vorauszahlung durch den Benutzer erfolgt sein, z.B. in der Form einer entsprechenden Code-Karte mit einer Codenummer, die vor einer Benutzung z.B. durch einen abreibbaren Druck geschützt ist, die in der Speichereinheit 25 der Dienstezentrale 23 gespeichert ist und die dem Benutzer z.B. einmalig die Übermittlung eines Schlüssels oder Schlüssel für einen bestimmten Geldbetrag gestattet. Ferner kann auch Geld von einer Chipkarte im Fahrzeug abgebucht werden, wobei hier nicht unbedingt eine Funkverbindung zu einer Dienstezentrale erforderlich ist, da ein Benutzer nach Leeren der Chipkarte, diese entweder wieder aufladen muss oder eine neue Chipkarte erwerben muss. Anstelle der Chipkarte kann auch eine Magnetkarte oder eine vergleichbare Speicherkarte verwendet werden.

In einem weiteren Ausführungsbeispiel ist auch möglich, dass der Fahrer in einem Auswahlmenu der Anzeige 4 eine zu decodierende Information auf dem Datenträger 20 auswählt und anschließend die Beschaffung des Schlüssels automatisch ohne eine weitere Eingabe erfolgt. Hierfür ist es erforderlich, dass der Benutzer sich bei dem Kauf des Datenträgers bzw. bei dem erstmaligen Einlegen des Datenträgers als Nutzer hat registrieren lassen. Bevorzugt ist die automatische Bestellung von Schlüsseln durch ein Passwort geschützt, um eine unbefugte Benutzung auszuschließen.

In einer bevorzugten Ausgestaltung ist der Informationsträger 20 als ein wiederbeschreibbarer Datenträger ausgeführt, wobei nach einmaliger Übermittlung eines gültigen Schlüssels für einen bestimmten Datensatz und/oder bestimmte Programmdaten die Eingabe des gültigen Schlüssels auf dem Informationsträger 20 gespeichert wird. Hierdurch wird vermieden, dass bei einem Ausfall der Stromversorgung, z.B. bei einem Batteriewechsel des Fahrzeugs, der flüchtige Arbeitsspeicher 3 der Navigationsvorrichtung 1 gelöscht wird und somit auch die Information verloren geht, das für einen bestimmten Datensatz und/oder Programmdaten bereits Gebühren entrichtet worden sind. In einer bevorzugten Ausführungsform wird hierbei eine Identifikation, z.B. eine Gerätenummer der Navigationsvorrichtung 1, mitgespeichert, so dass der Informationsträger 20 nur in der jeweiligen Navigationsvorrichtung 1 verwendet werden kann.

Die Navigationsvorrichtung 1 weist ferner eine Zeiterfassungseinheit 26 auf, vorzugsweise eine Funkuhr bzw. eine über einen Akkumulator gepufferte. Zeiterfassung. Hierdurch ist der Navigationsvorrichtung 1 die Bestimmung der aktuellen Uhrzeit möglich. In einer bevorzugten Ausführungsform können von der Dienstezentrale 23 Schlüssel übermittelt werden, die nur für einen bestimmten Zeitraum gelten. Diese ermöglichen der Recheneinheit 2 eine Decodierung von den jeweiligen, zugeordneten Datensätzen auf dem Informationsträger 20 nur für einen in dem Schlüssel codiert enthaltenen Zeitabschnitt, wobei die aktuelle Zeit entsprechend von der Zeiterfassungsvorrichtung 26 abgefragt wird.

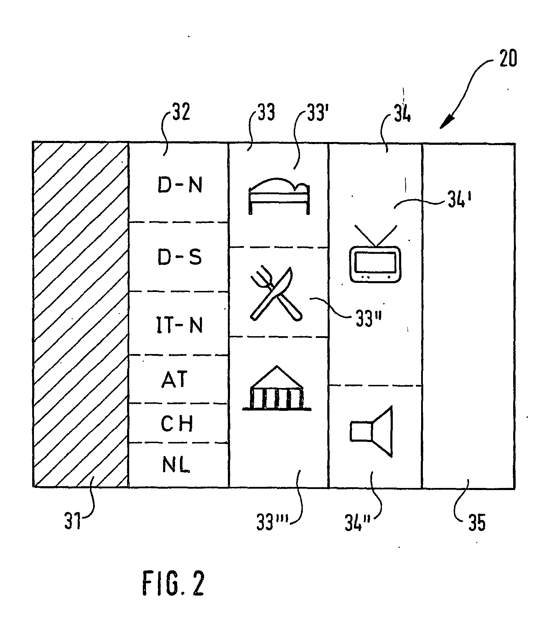

In der Figur 2 ist ein Ausführungsbeispiel für auf dem Informationsträger 20 gespeicherte Daten für die Verwendung in dem Datenträgerlaufwerk 19 der Navigationsvorrichtung 1 dargestellt. In einem ersten Speicherbereich 31 sind uncodierte Daten abgelegt, die insbesondere dazu dienen, einem Benutzer eine Auswahl von codierten Daten darzustellen und die Verbindung über die Funkschnittstelle 14 zu der Dienstezentrale 23 sowie eine Steuerung der Bedieneinheit 21 herzustellen. Insbesondere sind wesentliche Grundfunktionen, z.B. ein Betriebssystem, in dem uncodierten ersten Bereich 31 abgelegt. Die übrigen Bereiche des Informationsträgers 20 sind codiert und erlauben einen Zugriff der Recheneinheit 2 erst bei einem Vorliegen eines entsprechenden Schlüssels. In einem zweiten Bereich 32 sind Kartendaten codiert gespeichert. Die Kartendaten sind dabei nach Regionen gegliedert. Hierbei sind verschiedene Konstellationen von Schlüsseln möglich. Z.B. sind Schlüssel für jede einzelne Region möglich. Darüber hinaus sind auch Schlüssel möglich, die direkt mehrere Regionen freischalten können. Für alle Schlüssel können jeweils unterschiedliche Preise festgelegt werden.

In dem hier dargestellten Ausführungsbeispiel sind mögliche Regionen z.B. Deutschland-Nord D-N, Deutschland-Süd D-S, Italien-Nord IT-N, Österreich AT, Schweiz CH und die Niederlande NL. In einem dritten Bereich sind touristische Informationen vorzugsweise für die Bereiche abgelegt, zu denen auch Kartendaten in dem zweiten Bereich 32 gespeichert sind. Es sind z.B. Hotelinformationen 33', Restaurantinformationen 33 " und Hinweise auf Sehenswürdigkeiten und Punkte von Interesse 33''' möglich. In einem vierten Bereich 34 sind Videoinformationen 34` und Audioinformationen 34 " gespeichert. In einem fünften Bereich 35 sind weitere Funktionen der Navigationsvorrichtung gespeichert, die ebenfalls entsprechend freigeschaltet werden können. Z.B. kann dies eine dynamische Navigation sein, bei der von einer in der Figur 1 nicht dargestellten Radiovorrichtung Verkehrsinformationen an die Navigationsvorrichtung 1 übermittelt und bei der Routenplanung durch die Recheneinheit 2 berücksichtigt werden.

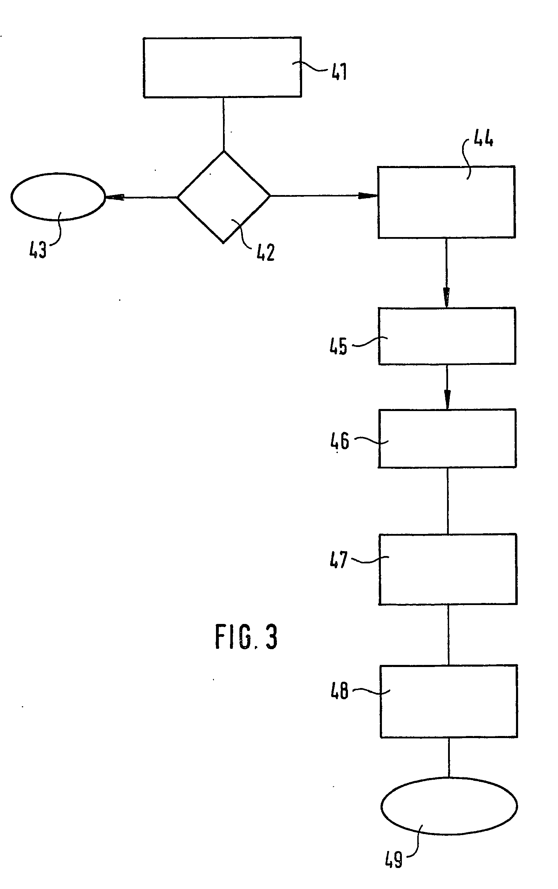

In der Figur 3 ist der Ablauf eines erfindungsgemäßen Verfahrens dargestellt. Ein Benutzer hat einen Informationsträger 20 erworben und möchte nun die Straßenkarten für den Norden Deutschlands für die Navigationsvorrichtung 1 freischalten lassen. Nach dem Einlegen des Informationsträgers 20 in das Datenträgerlaufwerk 19 wählt er über die Bedieneinheit 9 bzw. 21 die Funktion der Fahrzeugnavigation aus. In einem Hinweisschritt 41 wird der Benutzer darauf hingewiesen, dass bisher keine Kartendaten bzw. nicht die Kartendaten von der aktuellen Fahrzeugumgebung freigeschaltet sind. In einem anschließenden Abfrageschritt 42 wird der Benutzer gefragt, ob er die entsprechenden Kartendaten freischalten will. Wird dies von dem Benutzer verneint, so wird zu einem Endschritt 43 verzweigt und eine Navigationsunterstützung für das gewünschte Kartengebiet kann nicht gegeben werden. Wird dagegen das Freischalten von dem Benutzer bejaht, so wird zu einem Eingabeschritt 44 verzweigt, in dem der Benutzer aus einem in der Anzeigefläche 5 dargestellten Menü die Datensätze und/oder Programmdaten ausgewählt, die der Benutzer freischalten möchte. In einem anschließenden Identifikationsschritt 45 erfolgt eine Identifikation des Benutzers, z.B. durch die Eingabe einer Kundennummer oder die Eingabe einer Autorisierungsnummer, die einem Gegenwert der Speichereinheit 25 der Dienstezentrale zugeordnet ist. In einem Übermittlungsschritt 46 wird die Identität des Benutzers, die Identität des Informationsträgers 20, z.B. eine Datenträgernummer und/oder eine Identitätsnummer der Navigationsvorrichtung 1 an die Dienstezentrale 23 übertragen. In einer bevorzugten Ausführungsform werden alle drei Informationen übertragen. In einem anschließenden Berechnungsschritt 47 wird der entsprechende Schlüssel für den angeforderten Datensatz, also hier für die Karte Deutschland-Nord, in der Dienstezentrale berechnet und unter Berücksichtigung und Einschluss der zur Verfügung stehenden Identifikationsdaten, also der Datenträgernummer des Informationsträgers 20 und einer Nummer der Navigationsvorrichtung 1, die z.B. in einem in der Figur 1 nicht gezeigten nichtflüchtigen Speicher der Navigationsvorrichtung 1 abgelegt ist, an die Navigationsvorrichtung 1 zurück übertragen. In einem anschließenden Decodierungsschritt 48 werden die auf dem Informationsträger 20 vorliegenden Daten in dem zweiten Bereich 32 D-N der Deutschland-Nord-Karte entweder vollständig oder je nach Bedarf in den Arbeitsspeicher 3 der Navigationsvorrichtung 1 unter Decodierung mittels des übertragenen Schlüssels übertragen und stehen somit für die anschließende Fahrzeugnavigation zur Verfügung. In einem Abschlussschritt 49 wird dem Benutzer angezeigt, dass der von ihm gewünschte Datensatz nunmehr freigeschaltet ist. Die entsprechenden Kosten werden von der Datenzentrale 23 an die Abrechnungseinheit 13 weitergeleitet und von dieser dem Benutzer belastet werden, z.B. über eine Kreditkartenbelastung. Der Schlüssel wird auf dem Informationsträger 20 gespeichert, so dass auch nach einem Herausnehmen des Informationsträgers 20 oder nach einem Abschalten der Navigationsvorrichtung 1 die Information über die Freischaltung weiter zur Verfügung steht.

## Patentansprüche

1. Fahrerinformationsvorrichtung in einem Fahrzeug, wobei die Fahrerinformationsvorrichtung mit einem Datenträgerlaufwerk (19) für einen Informationsträger (20) verbunden ist, wobei Schlüssel zur Entschlüsselung von kodierten, auf dem Informationsträger gespeicherten Datensätzen und/oder Programmdaten in die Fahrerinformationsvorrichtung (1) übermittelbar sind, wobei die Schlüssel jeweils Teilen der Datensätze und/oder Programmdaten (32,33, 34, 35) jeweils zugeordnet sind, wobei nach der Übermittlung eines Schlüssels an die Fahrerinformationsvorrichtung der dem Schlüssel zugeordnete Teil der Datensätze und/oder Programmdaten durch die Fahrerinformationsvorrichtung (1) dekodierbar und verarbeitbar ist, wobei die Fahrerinformationsvorrichtung (1) über eine Funkschnittstelle (14) mit einer Dienstezentrale (23) verbindbar ist, wobei eine Bestellung eines Schlüssels an die Dienstezentrale (23) übermittelbar ist, wobei der Schlüssel zur Entschlüsselung des Datensatzes und/oder der Programmdaten auf dem Informationsträger (20) von der Dienstezentrale (23) berechbar und an die Fahrerinformationsvorrichtung (1) übermittelbar ist, wobei der Informationsträger mehrere Speicherbereiche aufweist, wobei ein erster Speicherbereich uncodierte Daten aufweist, die dazu dienen, einem Benutzer eine Auswahl von codierten Daten darzustellen, und wobei übrige Bereiche des Informationsträgers codiert sind und einen Zugriff der Recheneinheit erst bei einem Vorliegen eines entsprechenden Schlüssels erlauben,
**dadurch gekennzeichnet, dass**
der erste Speicherbereich zusätzlich uncodierte Daten aufweist, die dazu dienen, die Verbindung über die Funkschnittstelle zu der Dienstezentrale sowie eine Steuerung der Bedieneinheit herzustellen.

2. Fahrerinformationsvorrichtung nach Anspruch 1, **dadurch gekennzeichnet, dass** die Fahrerinformationsvorrichtung eine Navigationsvorrichtung (1) zur Steuerung eines Fahrzeugs in einem Straßennetz ist.

3. Fahrerinformationsvorrichtung nach einem der vorhergehenden Ansprüche, **dadurch gekennzeichnet, dass** in dem Schlüssel eine Identität des Datenträgers (20) und/oder eine Identität der Fahrerinformationsvorrichtung (1) enthalten ist und dass in der Fahrerinformationsvorrichtung eine Entschlüsselung von Daten nur bei einer Übereinstimmung der Identität des Geräts und/oder des Datenträgers durchführbar ist.

4. Fahrerinformationsvorrichtung nach einem der vorhergehenden Ansprüche, **dadurch gekennzeichnet, dass** in der Fahrerinformationsvorrichtung eine Uhr (26) angeordnet ist oder dass die Fahrerinformationsvorrichtung mit einer Uhr verbindbar ist, und dass eine Dekodierung von auf dem Datenträger gespeicherten Daten nur für einen vorgebbaren Zeitraum möglich ist.

5. Verfahren zur Freischaltung von Daten auf einem Informationsträger, wobei auf dem Informationsträger mehrere Datensätze und/oder Programmdaten gespeichert sind, wobei die Datensätze und/oder Programmdaten bei Vorliegen eines den einzelnen Datensätzen und/oder Programmdaten jeweils zugeordneten Schlüssels dekodiert werden, wobei die Schlüssel zur Entschlüsselung der kodierten, auf dem Informationsträger gespeicherten Datensätzen und/oder Programmdaten von einer Dienstezentrale (23) an die Fahrerinformationseinrichtung (1) übermittelt werden, wobei die Schlüssel jeweils Teilen der Datensätze und/oder Programmdaten (32, 33, 34, 35) jeweils zugeordnet werden, wobei nach der Übermittlung eines Schlüssels an die Fahrerinformationsvorrichtung der dem Schlüssel zugeordnete Tell der Datensätze und/oder Programmdaten durch die Fahrerinformationsvorrichtung (1) dekodiert und verarbeitet werden, wobei die Fahrerinformationsvorrichtung (1) über eine Funkschnittstelle (14) mit einer Dienstezentrale (23) verbunden wird, wobei eine Bestellung eines Schlüssels an die Dienstezentrale (23) übermittelt wird, wobei der Schlüssel zur Entschlüsselung des Datensatzes und/oder der Programmdaten auf dem Informationsträger (20) von der Dienstezentrale (23) berechnet und an die Fahrerinformationsvorrichtung (1) übermittelt wird, wobei der Informationsträger mehrere Speicherbereiche aufweist, wobei ein erster Speicherbereich uncodierte Daten aufweist, die dazu dienen, einem Benutzer eine Auswahl von codierten Daten darzustellen und wobei übrige Bereiche des Informationsträgers codiert sind und einen Zugriff der Recheneinheit erst bei einem Vorliegen eines entsprechenden Schlüssels erlauben,
**dadurch gekennzeichnet, dass**
der erste Speicherbereich zusätzlich uncodierte Daten aufweist, die dazu dienen, die Verbindung über die Funkschnittstelle zu der Dienstezentrale sowie eine Steuerung der Bedieneinheit herzustellen,

6. Verfahren zur Freischaltung nach Anspruch 5, **dadurch gekennzeichnet, dass** von einem Benutzer ein Code eingegeben wird, dass der Code an eine Dienstezentrale übermittelt wird, dass die Dienstezentrale aus dem Code einen Schlüssel bestimmt und dass der Code von der Dienstezentrale an eine Rechenvorrichtung übermittelt wird, die auf den Informationsträger zugreifen kann.

7. Verfahren nach Anspruch 6, **dadurch gekennzeichnet, dass** mit dem Code eine Benutzeridentifikation und/oder eine Geräteidentifikation und/oder eine Datenträgeridentifikation an die Dienstezentrale übertragen wird.

8. Verfahren nach einem der Ansprüche 6-7, **dadurch gekennzeichnet, dass** einem Benutzer Kosten für die Freischaltung berechnet werden.

9. Verfahren nach einem der Ansprüche 5-8, **dadurch gekennzeichnet, dass** ein gewünschter Zeitraum an die Dienstezentrale übertragen wird und dass der übertragene Schlüssel nur für den gewünschten Zeitraum eine Dekodierung der dem Code zugeordneten Datensätze und/oder Programmdaten ermöglicht.

## Claims

1. Driver information device in a vehicle, wherein the driver information device is connected to a data carrier disk drive (19) for an information carrier (20), wherein keys for decrypting encoded data records and/or program data stored on the information carrier can be transferred to the driver information device (1), wherein the keys are respectively assigned to parts of the data records and/or program data (32, 33, 34, 35), wherein after the transfer of a key to the driver information device the part of the data records and/or program data which is assigned to the key can be decoded and processed by the driver information device (1), wherein the driver information device (1) can be connected to a service centre (23) via a radio interface (14), wherein the creation of a key can be communicated to the service centre (23), wherein the key for decrypting the data record and/or the program data on the information carrier (20) can be calculated by the service centre (23) and transferred to the driver information device (1), wherein the information carrier has a plurality of memory regions, wherein a first memory region has uncoded data which serve to provide a user with a selection of encoded data items, and wherein other regions of the information carrier are encoded and permit access to the computing unit only when a corresponding key is present,
**characterized in that**
the first memory region additionally has uncoded data which serves to establish the connection to the service centre via the radio interface and to establish control of the operator control unit.

2. Driver information device according to Claim 1, **characterized in that** the driver information device is a navigation device (1) for controlling a vehicle in a road network.

3. Driver information device according to one of the preceding claims, **characterized in that** the key contains an identity of the data carrier (20) and/or an identity of the driver information device (1), and **in that** decryption of data can be carried out in the driver information device only when the identity of the equipment and/or that of the data carrier correspond.

4. Driver information device according to one of the preceding claims, **characterized in that** a clock (26) is arranged in the driver information device, or **in that** the driver information device can be connected to a clock, and **in that** data stored on the data carrier can be decoded only for a predefinable time period.

5. Method for enabling access to data on an information carrier, wherein a plurality of data records and/or program data are stored on the information carrier, wherein the data records and/or program data are decoded when a key which is respectively assigned to the individual data records and/or program data is present, wherein the keys for decoding the encoded data records and/or program data stored on the information carrier are transferred to the driver information device (1) from a service centre (23), wherein the keys are respectively assigned to parts of the data records and/or program data (32, 33, 34, 35), wherein after the transfer of a key to the driver information device the portion of the data records and/or program data which is assigned to the key is decoded and processed by the driver information device (1), wherein the driver information device (1) is connected to a service centre (23) via a radio interface (14), wherein the creation of a key is communicated to the service centre (23), wherein the key for decrypting the data record and/or the program data on the information carrier (20) is calculated by the service centre (23) and transferred to the driver information device (1), wherein the information carrier has a plurality of memory regions, wherein a first memory region has uncoded data items which serve to provide a user with a selection of encoded data items, and wherein other regions of the information carrier are encoded and permit access to the computing unit only when a corresponding key is present,
**characterized in that**
the first memory region additionally has uncoded data which serves to establish the connection to the service centre via the radio interface and to establish control of the operator control unit.

6. Method for enabling access according to Claim 5, **characterized in that** a code is input by a user, **in that** the code is transferred to a service centre, **in that** the service centre determines a key from the code, and **in that** the code is transferred from the service centre to a computing device which can access the information carrier.

7. Method according to Claim 6, **characterized in that** a user identifier and/or an equipment identifier and/or a data carrier identifier are/is transmitted to the service centre with the code.

8. Method according to one of Claims 6 - 7, **characterized in that** a user is charged costs for the enabling of access.

9. Method according to one of Claims 5 - 8, **characterized in that** a desired time period is transmitted to the service centre, and **in that** decoding of the data records and/or program data assigned to the code is made possible by the transmitted key only for the desired time period.

## Revendications

1. Système d'information de conducteur dans un véhicule, le système d'information de conducteur étant relié à un lecteur de support de données (19) prévu pour un support d'information (20), des clés pouvant être transmises pour décrypter des jeux de données et/ou des données de programme codés mémorisés sur le support d'information dans le système d'information de conducteur (1), les clés étant respectivement associées à des parties des jeux de données et/ou des données de programme (32, 33, 34, 35), la partie des jeux de données et/ou des données de programme associée à la clé pouvant être décodée et diffusée par le système d'information de conducteur (1) après la transmission d'une clé au système d'information de conducteur, le système d'information de conducteur (1) pouvant être relié à une centrale de services (23) par le biais d'une interface radio (14), une commande d'une clé pouvant être transmise à la centrale de services (23), la clé pouvant être facturée par la centrale de services (23) sur le support d'information (20) pour le décryptage du jeu de données et/ou des données de programme et être transmise au système d'information de conducteur (1), le support d'information comportant plusieurs zones de mémoire, une première zone de mémoire comportant des données non codées servant à communiquer à un utilisateur une sélection de données codées et les zones restantes du support d'information étant codées et ne permettant d'accéder à l'ordinateur qu'en présence d'une clé correspondante, **caractérisé en ce que** la première zone de mémoire comporte en sus des données non codées servant à mettre en place la liaison avec la centrale de services par le biais de l'interface radio ainsi qu'un élément de commande de l'unité de commande.

2. Système d'information de conducteur selon la revendication 1, **caractérisé en ce que** le système d'information de conducteur est un dispositif de navigation (1) servant à commander un véhicule sur un réseau routier.

3. Système d'information de conducteur selon l'une quelconque des revendications précédentes, **caractérisé en ce qu'**une identité du support de données (20) et/ou une identité du système d'information de conducteur (1) sont contenues dans la clé et **en ce qu'**un décryptage de données ne peut être réalisé dans le système d'information de conducteur qu'en cas de conformité de l'identité de l'appareil et/ou du support de données.

4. Système d'information de conducteur selon l'une quelconque des revendications précédentes, **caractérisé en ce qu'**une horloge (26) est disposée dans le système d'information de conducteur ou **en ce que** le système d'information de conducteur peut être relié à une horloge et **en ce qu'**un décodage de données mémorisées sur le support de données n'est possible que pendant une plage horaire prédéfinie.

5. Procédé d'activation de données sur un support d'information, plusieurs jeux de données et/ou données de programme étant mémorisés sur le support d'information, les jeux de données et/ou les données de programme étant décodés en présence d'une clé respectivement associée aux jeux de données et/ou aux données de programme individuels, les clés étant transmises au dispositif d'information de conducteur (1) par une centrale de services (23) pour décrypter des jeux de données et/ou des données de programme codés mémorisés sur le support d'information, les clés étant respectivement associées à des parties des jeux de données et/ou des données de programme (32, 33, 34, 35), la partie des jeux de données et/ou des données de programme associée à la clé étant décryptée et diffusée par le système d'information de conducteur (1) après transmission d'une clé au système d'information de conducteur, le système d'information de conducteur (1) étant relié à une centrale de services (23) par le biais d'une interface radio (14), une commande d'une clé étant transmise à la centrale de services (23), la clé étant facturée par la centrale de services (23) pour le décryptage du jeu de données et/ou des données de programme sur le support d'information (20) et transmise au système d'information de conducteur (1), le support d'information comportant plusieurs zones de mémoire, une première zone de mémoire comportant des données non codées servant à communiquer à un utilisateur une sélection de données codées et les zones restantes du support d'information étant codées et ne permettant d'accéder à l'ordinateur qu'en présence d'une clé correspondante, **caractérisé en ce que** la première zone de mémoire comporte en sus des données non codées servant à mettre en place la liaison avec la centrale de services par le biais de l'interface radio ainsi qu'un élément de commande de l'unité de commande.

6. Procédé d'activation selon la revendication 5, **caractérisé en ce qu'**un code est saisi par un utilisateur, **en ce que** le code est transmis à une centrale de services, **en ce que** la centrale de services définit une clé à partir du code et **en ce que** le code est transmis par la centrale de services à un ordinateur pouvant accéder au support d'information.

7. Procédé selon la revendication 6, **caractérisé en ce qu'**une identification d'utilisateur et/ou une identification d'appareil et/ou une identification de support de données sont transmises à la centrale de services avec le code.

8. Procédé selon l'une quelconque des revendications 6 et 7, **caractérisé en ce qu'**un utilisateur est facturé pour le coût de l'activation.

9. Procédé selon l'une quelconque des revendications 5 à 8, **caractérisé en ce qu'**une plage horaire souhaitée est transmise à la centrale de services et **en ce que** la clé transmise ne permet un décodage des jeux de données et/ou des données de programme associés au code que pendant la plage horaire souhaitée.
